(19) Europäisches Patentamt
European Patent Office
Office européen des brevets

(11) **EP 4 450 277 A1**

(12) **EUROPEAN PATENT APPLICATION**

(43) Date of publication:
**23.10.2024 Bulletin 2024/43**

(21) Application number: **24171237.1**

(22) Date of filing: **19.04.2024**

(51) International Patent Classification (IPC):
**B32B 19/04** (2006.01)   **H01M 10/658** (2014.01)
**H01M 50/249** (2021.01)   **B32B 5/16** (2006.01)
**B32B 5/18** (2006.01)   **B32B 5/30** (2006.01)
**B32B 15/04** (2006.01)   **B32B 27/06** (2006.01)

(52) Cooperative Patent Classification (CPC):
**H01M 10/658; B32B 5/16; B32B 5/18; B32B 5/30;
B32B 15/046; B32B 19/045; B32B 19/048;
B32B 27/065; H01M 50/249;** H01M 2220/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.04.2023 KR 20230052566
14.08.2023 KR 20230106093**

(71) Applicant: **Samsung SDI Co., Ltd.
Yongin-si, Gyeonggi-do 17084 (KR)**

(72) Inventors:
• **Park, Hye Jin
17084 Yongin-si, Gyeonggi-do (KR)**
• **Woo, Myung Heui
17084 Yongin-si, Gyeonggi-do (KR)**

• **Ryu, Bo Kyung
17084 Yongin-si, Gyeonggi-do (KR)**
• **Yang, Seung Yong
17084 Yongin-si, Gyeonggi-do (KR)**
• **Lee, Jae Hyun
17084 Yongin-si, Gyeonggi-do (KR)**
• **Ra, Ha Na
17084 Yongin-si, Gyeonggi-do (KR)**
• **Lee, Jung Hyo
17084 Yongin-si, Gyeonggi-do (KR)**
• **Nam, Hyun
17084 Yongin-si, Gyeonggi-do (KR)**
• **Nam, Jung Hyun
17084 Yongin-si, Gyeonggi-do (KR)**
• **Yang, Yun Sung
17084 Yongin-si, Gyeonggi-do (KR)**

(74) Representative: **Gulde & Partner
Patent- und Rechtsanwaltskanzlei mbB
Wallstraße 58/59
10179 Berlin (DE)**

(54) **BATTERY INSULATION SHEET, MANUFACTURING METHOD THEREOF, AND BATTERY MODULE COMPRISING THE SAME**

(57)    Disclosed are a battery insulation sheet including an aerogel layer, wherein the aerogel layer includes a fibrillized polymer matrix and aerogel particles distributed in the fibrillized polymer matrix, and the fibrillized polymer matrix includes a dry binder, a method of manufacturing the same, and a battery module including the same.

FIG. 2
100

EP 4 450 277 A1

**Description**

**BACKGROUND**

**1. Field**

Embodiments relate to a battery insulation sheet, a method of manufacturing the same, and a battery module including the same.

**2. Description of the Related Art**

A secondary battery is a power storage system that converts electrical energy into chemical energy, stores the chemical energy, and provides high energy density. Compared to a primary battery, which is not designed to be rechargeable, a secondary battery is designed to be rechargeable and is widely used in IT devices such as smartphones, cellular phones, laptop computers, and tablet computers. Recently, there has been increased interest in electric vehicles as a way to reduce or prevent environmental pollution, and high-capacity secondary batteries are being adopted for use in electric vehicles. The secondary battery typically exhibits characteristics, such as high density, high output, and good stability.

If a plurality of high-capacity cells is included in a battery module, such as in a lithium secondary battery, one cell may overheat and may go into thermal runaway for various reasons, which may adversely affect other cells adjacent thereto, and therefore it is desirable to thermally isolate neighboring cells from each other.

Conventionally, in some cases, a plate or an insulating resin sheet is disposed between cells to isolate and insulate neighboring cells from each other.

The information disclosed in this section is provided only for enhancement of understanding of the background of the present disclosure and, therefore, it may contain information that does not form the prior art.

**SUMMARY**

Embodiments of the present disclosure provide a battery insulation sheet having excellent thermal insulation, heat resistance, low dust properties, and flexibility, a method of manufacturing the same, and a battery module including the same.

An embodiment of the present disclosure provides a battery insulation sheet including an aerogel layer, wherein the aerogel layer includes a fibrillized polymer matrix and aerogel particles distributed in the fibrillized polymer matrix, and the fibrillized polymer matrix includes a dry binder.

The dry binder may include a fluorinated binder, and the fluorinated binder may be at least one selected from the group consisting of polytetrafluoroethylene, a polyvinylidene fluoride-hexapropylene copolymer, and polyvinylidene fluoride.

The fibrillated polymer matrix may be included so as to account for 10 wt% to 90 wt% of the total amount of the aerogel layer, and the aerogel particles may be included so as to account for 10 wt% to 90 wt% of the total amount of the aerogel layer.

The aerogel particles may have a BET specific surface area of 500 $m^2$/g to 1,000 m2/g.

The aerogel particles may have an average particle size (D50) of 5 $\mu$m to 100 $\mu$m.

The aerogel particles may be dispersed in the fibrillized polymer matrix.

The aerogel layer may satisfy Formula 1 below.

$$[\text{Formula 1}]$$

$$0.1 \leq W_{FB}/T_{PM} \leq 18$$

In Formula 1 above, $W_{FB}$ indicates the content (wt%) of the dry binder to the total amount of the aerogel layer, and $T_{PM}$ indicates the average particle size ($\mu$m) of the aerogel particles.

The battery insulation sheet may further include a substrate provided on an upper surface, a lower surface, or upper and lower surfaces of the aerogel layer.

The battery insulation sheet may have a structure in which a first substrate, the aerogel layer, and a second substrate are sequentially laminated.

According to another embodiment of the present disclosure, a method of manufacturing a battery insulation sheet includes: manufacturing a raw material mixture including a powdered dry binder and powdered aerogel particles

and extruding the raw material mixture using an extruder to manufacture an aerogel layer, wherein the aerogel layer includes a fibrillized polymer matrix in which aerogel particles are distributed, and the fibrillized polymer matrix includes a dry binder.

The manufacturing of the raw material mixture may include a primary dry mixing step or primary and secondary dry mixing steps.

The step of manufacturing the raw material mixture may include a primary dry mixing step and a secondary dry mixing step, and the stirring speed in the secondary dry mixing step may be at least 2 times the stirring speed in the primary dry mixing step.

In the primary dry mixing step, the temperature may be 20 °C to 65 °C, the stirring speed may be 2000 rpm or less, and the stirring time may be 5 min to 15 min, and in the secondary dry mixing step, the temperature may be 20 °C to 65 °C, the stirring speed may be 4000 rpm to 10,000 rpm, and the stirring time may be 10 min to 60 min.

The step of manufacturing the aerogel layer may include introducing the raw material mixture into the extruder and extruding the raw material mixture in a sheet form.

The step of manufacturing the aerogel layer may be performed at a temperature of 25 °C to 150 °C and a pressure of 1 MPa to 100 MPa.

The method may further include laminating a substrate on an upper surface, a lower surface, or upper and lower surfaces of the aerogel layer.

A first substrate and a second substrate may be laminated on the upper and lower surfaces of the aerogel layer, respectively.

A further embodiment of the present disclosure provides a battery module including a plurality of cells and the battery insulation sheet provided between the plurality of cells, wherein upper and lower surfaces of the battery insulation sheet are disposed to face cells adjacent thereto, respectively.


## BRIEF DESCRIPTION OF DRAWINGS

The accompanying drawings, which are incorporated in this specification, illustrate exemplary embodiments and serve to further illustrate the technical aspects and features of the disclosure in conjunction with the detailed description of exemplary embodiments that follows, and the disclosure is not to be construed as limited to what is shown in such drawings. In the drawings:

FIG. 1 is a schematic view showing the structure of a battery insulation sheet according to an embodiment;
FIG. 2 is a schematic view showing the structure of a battery insulation sheet according to another embodiment;
FIG. 3 is a schematic view showing the structure of a battery insulation sheet according to a further embodiment;
FIG. 4 is a schematic view showing a battery insulation sheet according to an embodiment formed between a plurality of cells.


## DETAILED DESCRIPTION OF EXEMPLARY EMBODIMENTS

Hereinafter, embodiments will be described in detail such that a person having ordinary skill in the art can easily implement the embodiments. However, embodiments may be implemented in many different forms and are not limited to the embodiments described herein.

An insulating material, which is a material that prevents heat from flowing from higher to lower temperatures or temperature areas, is used not only in refrigerators, cold storages, and buildings but also in a variety of other industries, including the aircraft, electronics, and automotive industries.

The insulating material provides desirable thermal insulation performance through low thermal conductivity and high mechanical strength to maintain thermal insulation performance over time.

Aerogel, which is a transparent or translucent advanced material having a nanoporous structure, exhibits very low density and low thermal conductivity. Therefore aerogel has a high potential as an insulating material and is considered to be a highly efficient super insulating material that can be used in a variety of industrial applications.

Advantages of aerogel are that aerogel has lower thermal conductivity than conventional organic insulating materials such as closed-cell foams, such as Styrofoam ® (a registered trademark owned by DDP SPECIALTY ELECTRONIC MATERIALS US, INC.), and that aerogel avoids weaknesses of organic insulating materials, such as fire vulnerability and generation of harmful gases in the event of fire.

A battery insulation sheet according to embodiments may include an aerogel layer, wherein the aerogel layer may include a fibrillized polymer matrix and aerogel particles distributed in the fibrillized polymer matrix, and the fibrillized polymer matrix may include a dry binder.

The battery insulation sheet having the above structure may include a relatively high content of the dry binder which exhibits heat resistance to improve heat resistance as well as thermal insulation. The dry binder may be present in a fibrillized polymer matrix structure, and the aerogel particles may be dispersed in the fibrillized polymer matrix, such that the battery insulation sheet may have excellent flexibility, and detachment of the aerogel particles (also referred to as dusting) may be mitigated or prevented, so that the battery insulation sheet may have low dust properties.

The dry binder may have excellent heat resistance but may be relatively difficult to disperse in water. However, the battery insulation sheet according to the embodiment may include a relatively high content of the dry binder without affecting dispersibility of the dry binder through a dry process such that the dry binder can be easily included in the insulation sheet, thereby achieving better heat resistance, desired heat resistance may be achieved through a relatively thin thickness of the insulation sheet, and detachment of aerogel particles may be reduced.

In embodiments, the fibrillized polymer matrix may include no (or may omit any) aqueous binder. The aqueous binder may refer to an ordinary water-soluble binder, and may include, for example, an inorganic binder, an aqueous polymer, an anionic water-soluble polymer, a cationic water-soluble polymer, and a water-dispersible polymer.

The fibrillized polymer matrix may be manufactured through a dry process and may include no aqueous binder. Because no aqueous binder is included, an aerogel layer with a dispersed structure of aerogel in the fibrillized polymer matrix may be formed by extrusion in a dry process (e.g., a dry extrusion process).

The inorganic binder may include soluble silicate, and may be an ordinary aqueous polymer such as sodium silicate, potassium silicate, or lithium silicate.

The aqueous polymer may refer to an ordinary aqueous polymer, such as polyvinyl alcohol, polyethylene oxide, polyacrylamide, or polyvinylpyrrolidone.

The anionic water-soluble polymer may refer to an ordinary anionic water-soluble polymer, such as a polymer having functional groups of carboxylic acid, sulfonic acid, sulfuric acid ester, and/or phosphoric acid ester, or a polymer having functional groups of salts thereof.

The cationic water-soluble polymer may refer to at least one selected from the group consisting of amine, ammonium, phosphonium, sulfonium, and/or a polymer having functional groups of salts thereof. For example, the cationic water-soluble polymer may be a polymer having an amine group, and the cationic water-soluble polymer may be an ordinary cationic water-soluble polymer, such as polyethylene amine or polyamine.

The water-dispersible polymer may refer to an ordinary water-dispersible polymer, such as water-dispersible polyurethane or water-dispersible polyester.

The dry binder may be, for example, a fibrillized binder. The dry binder may be a binder capable of being fibrillated or a binder fibrillated so as to form a matrix.

The dry binder may be a binder that is not impregnated, soluble, and dispersible in a solvent. The dry binder may be a fibrillated binder, which may act as a matrix configured to support and bind aerogel (e.g., aerogel particles). The dry binder may have an aspect ratio of 10 or more, 20 or more, 50 or more, or 100 or more.

The dry binder may include at least one or two or more copolymers selected from the group consisting of polytetrafluoroethylene (PTFE), a polyvinylidene fluoride-hexapropylene (PVDF-HFP) copolymer, polyvinylidene fluoride (PVDF), polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), and/or fluorinated rubber; however, embodiments of the present disclosure are not limited thereto.

For example, the dry binder may include a fluorinated binder. The fluorinated binder may include at least one selected from the group consisting of polytetrafluoroethylene (PTFE), a polyvinylidene fluoride-hexapropylene (PVDF-HFP) copolymer, and/or polyvinylidene fluoride (PVDF). Because the dry binder is included, the binder may be fibrillated through a dry process. In the dry process, a raw material mixture may be extruded using an extruder to manufacture an aerogel layer. If an aqueous binder is included, it may be difficult to fibrillate the binder.

In embodiments, the aerogel particles may have a BET specific surface area in a range of 500 $m^2/g$ to 1,000 $m^2/g$. For example, the aerogel particles may have a BET specific surface area in a range of 500 $m^2/g$ to 950 $m^2/g$, 550 $m^2/g$ to 950 $m^2/g$, or 600 $m^2/g$ to 900 $m^2/g$. When the aerogel particles having the BET specific surface area value within the above ranges are included, heat transfer and heat propagation between a plurality of cells may be effectively prevented, thereby improving thermal insulation of the battery insulation sheet.

The average particle size D50 of the aerogel particles may be in a range of 5 $\mu$m to 100 $\mu$m, 10 $\mu$m to 100 $\mu$m, or 50 $\mu$m to 100 $\mu$m. When the aerogel particles having the particle size within the above ranges are included, thermal insulation may be improved while preventing agglomeration between the aerogel particles and an increase in the thickness of the insulation sheet to further delay heat transfer between the plurality of cells.

The average particle size D50 may be measured, for example, using a laser diffraction method or scanning electron microscopy (SEM), wherein the average particle size D50 of particles may be defined as the particle size at 50% of the particle size distribution (for example, the particle size corresponding to cumulative 50% of the volume of the particle size distribution).

The aerogel particles may be dispersed in the fibrillated polymer matrix. If an aerogel layer is formed using a manufacturing method described below, the aerogel layer may be formed so as to have a structure in which aerogel particles are uniformly dispersed in the fibrillated polymer matrix.

In embodiments, the fibrillated polymer matrix may be included so as to account for 10 wt% to 90 wt% of the total amount of the aerogel layer, and the aerogel particles may be included so as to account for 10 wt% to 90 wt% of the total amount of the aerogel layer.

The fibrillated polymer matrix may be included so as to account for 20 wt% to 90 wt%, 20 wt% to 75 wt%, or 20 wt% to 65 wt% of the total amount of the aerogel layer, and the aerogel particles may be included so as to account for 10 wt% to 80 wt%, 25 wt% to 80 wt%, or 35 wt% to 80 wt% of the total amount of the aerogel layer. By varying the content of the fibrillated polymer matrix and the aerogel particles in the aerogel layer within the above range, a battery insulation sheet having excellent thermal insulation, heat resistance, flexibility, and low dust properties may be provided.

In embodiments, the content of the dry binder may be adjusted depending on the size of the aerogel particles. The aerogel layer may satisfy Formula 1 below.

[Formula 1]

$$0.1 \leq W_{FB}/T_{PM} \leq 18$$

In Formula 1 above, $W_{FB}$ indicates the content (wt%) of the dry binder to the total amount of the aerogel layer, and $T_{PM}$ indicates the average particle size ($\mu$m) of the aerogel particles.

The $W_{FB}/T_{PM}$ value may be 0.1 to 18, 0.1 to 10, 0.1 to 5, or 0.2 to 1.3. The $W_{FB}/T_{PM}$ value may indicate the relationship between the average particle size of the aerogel particles and the content of the dry binder that may be included in the aerogel layer. For example, as the size of the aerogel particles increases, it may be more difficult for the dry binder to be packed into the fibrillated matrix, and as the size of the aerogel particles decreases, the specific surface area may increase, requiring an excessive amount of the binder, which may reduce the thermal insulation of the insulation sheet. Therefore, the aerogel particle size may affect the content of the dry binder that can be included. By adjusting the $W_{FB}/T_{PM}$ value to the above range, therefore, it is possible to provide a battery insulation sheet having excellent thermal insulation, heat resistance, flexibility, and low dust properties with a small thickness.

The aerogel layer may have a structure in which the aerogel particles are uniformly distributed in the fibrillated polymer matrix using a manufacturing method, a description of which will follow. The aerogel layer may have excellent thermal insulation even if the aerogel layer is formed so as to have a small thickness because there are not many empty spaces therein. The aerogel layer may have excellent heat resistance because the aerogel layer may comprise a high content of the dry binder having heat resistance. Because the aerogel particles may be uniformly distributed in the fibrillated polymer matrix, dust generation due to detachment of the aerogel particles may be prevented. Internal voids of the aerogel layer may absorb vibration and shock but may increase the thickness of the insulation sheet.

The battery insulation sheet according to embodiments may be used as an insulation sheet for various types of batteries because the aerogel layer may achieve excellent flexibility through the fibrillated polymer matrix even though the aerogel layer does not have many internal voids, and in an environment where the battery is not stationary during operation but is in motion, such as in an electric vehicle, detachment of the aerogel particles may be prevented.

The thickness of the aerogel layer may be in a range of 1 mm to 10 mm, 1 mm to 5 mm, or 1 mm to 3 mm. By forming the aerogel layer on a substrate having a thickness within the above ranges, an insulation sheet having excellent thermal insulation, heat resistance, flexibility, and low dust properties with a small thickness may be manufactured.

In an embodiment, the battery insulation sheet may further include a substrate provided on an upper surface, a lower surface, or upper and lower surfaces of the aerogel layer.

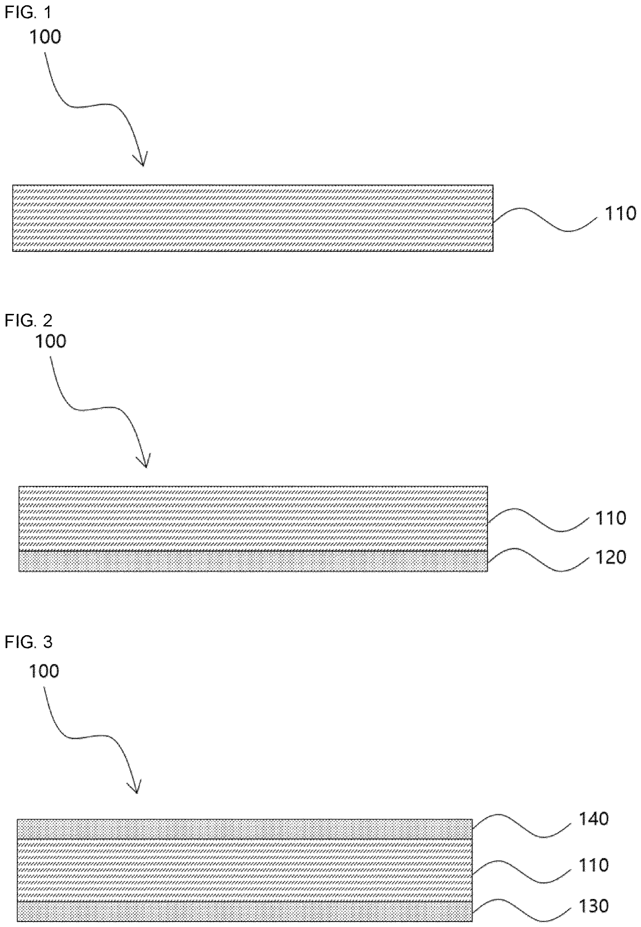

As an example, FIG. 1 is a schematic view showing the structure of a battery insulation sheet according to an embodiment.

Referring to FIG. 1, the battery insulation sheet 100 may include an aerogel layer 110, wherein an upper surface and a lower surface of the aerogel layer 110 may be disposed so as to face cells (e.g., battery cells) adjacent thereto, respectively.

As another example, FIG. 2 is a schematic view showing the structure of a battery insulation sheet according to another embodiment.

Referring to FIG. 2, the battery insulation sheet 100 includes a substrate 120 and an aerogel layer 110 formed on the substrate 120, wherein an upper surface of the battery insulation sheet, e.g., an upper surface of the aerogel layer 110, and a lower surface of the substrate 120 may be disposed so as to face cells adjacent thereto, respectively.

As a further example, FIG. 3 is a schematic view showing the structure of a battery insulation sheet according to a further embodiment.

Referring to FIG. 3, the battery insulation sheet 100 may have a structure including a first substrate 130, an aerogel layer 110 formed on the first substrate 130, and a second substrate 140 on (for example, formed on) the aerogel layer 110. The battery insulation sheet may have a structure in which the first substrate 130, the aerogel layer 110, and the second substrate 140 are sequentially laminated. The first substrate 130 and the second substrate 140 may be disposed so as to face cells adjacent thereto, respectively. The first substrate 130 and the second substrate 140 may be made of the same material or different materials.

The substrate (for example, the first substrate 130, the second substrate 140, or the substrate 120 described above) may include, without being limited to, a resin, a metal, an inorganic material other than the metal, and/or a composite thereof. The form of the substrate may be, without being limited to, a film, a membrane, a sheet, etc. The substrate may refer to the substrate 120 of FIG. 2 or the first substrate 130 and the second substrate 140 of FIG. 3.

The resin may include at least one selected from the group consisting of, for example, polyethylene, polypropylene, polystyrene, polyethylene terephthalate, and/or polyamide.

The metal may include at least one selected from the group consisting of, for example, copper, nickel, cobalt, iron, chromium, vanadium, palladium, ruthenium, rhodium, molybdenum, tungsten, iridium, silver, gold, and/or platinum. If a substrate made of the above metal is used, the substrate may be subjected to anti-corrosion treatment or insulating treatment.

The inorganic material may include at least one selected from the group consisting of calcium carbonate ($CaCO_3$), talc, and/or mica.

in one embodiment, the substrate may include an inorganic material, and more specifically, the substrate may include mica. In this embodiment, thermal insulation, durability, etc. of the insulation sheet may be improved.

The thickness of the substrate may be in a range of 0.01 mm to 5 mm, 0.05 mm to 3 mm, or 0.1 mm to 1 mm. If a substrate having a thickness within the above ranges is included, durability of the battery insulation sheet may be improved.

A method of manufacturing a battery insulation sheet according to embodiments may include a step of manufacturing a raw material mixture including a powdered dry binder and powdered aerogel particles and a step of extruding the raw material mixture using an extruder to manufacture an aerogel layer including a fibrillized polymer matrix in which aerogel particles are distributed and a dry binder.

The method of manufacturing the battery insulation sheet may be performed entirely through a dry process, and a detailed description of the aerogel layer may be the same as described above.

In the step of manufacturing the raw material mixture including the powdered dry binder and the powdered aerogel particles, a detailed description of the dry binder and the aerogel particles may be the same as described above.

In the step of manufacturing the raw material mixture, the dry binder and the aerogel particles may contain no solvent and/or may be mixed in a powder phase.

The step of manufacturing the raw material mixture may be performed through one or two mixing steps. The step of manufacturing the raw material mixture may include a primary dry mixing step and a secondary dry mixing step, wherein the stirring speed in the secondary dry mixing step may be at least 2 times, 2 to 8 times, or 4 to 6 times the stirring speed in the primary dry mixing step.

In the primary dry mixing step, the temperature may be in a range of 20 °C to 65 °C, 25 °C to 50 °C, or 25 °C to 35 °C, the stirring speed may be in a range of 2000 rpm or less, 500 rpm to 1800 rpm, or 800 rpm to 1300 rpm, and the stirring time may be in a range between 5 min to 15 min.

In the secondary dry mixing step, the temperature may be in a range of 20 °C to 65 °C, 25 °C to 50 °C, or 25 °C to 35 °C, the stirring speed may be in a range of 4000 rpm to 10,000 rpm, 4000 rpm to 8000 rpm, or 4000 rpm to 6000 rpm, and the stirring time may be in a range of 10 min to 60 min, 10 min to 40 min, or 20 min to 30 min.

The raw material mixture that has gone through the first and secondary dry mixing steps under the above conditions is extruded and the aerogel layer having the aerogel particles distributed in the fibrillized polymer matrix may be formed.

In the step of manufacturing the raw material mixture, a stirrer may be used for stirring. The stirrer may include, for example, a kneader. For example, the stirrer may have a structure including a chamber, at least one rotating shaft rotatably disposed in the chamber, and a blade rotatably coupled to the rotating shaft. The blade may be disposed in a longitudinal direction of the rotating shaft. The blade may include at least one selected from among, for example, a ribbon blade, a sigma blade, a jet (Z) blade, a dispersing blade, and a screw blade. If the blade is included, the aerogel particles and the dry binder may be effectively mixed without any solvent to manufacture a dough-like raw material mixture.

In manufacturing the raw material mixture, the dry binder may be included in a range to account for 20 wt% to 70 wt%, 30 wt% to 60 wt%, or 40 wt% to 60 wt% of the total amount of the raw material mixture, and the aerogel particles may be included in a range to account for 30 wt% to 80 wt%, 40 wt% to 70 wt%, or 40 wt% to 60 wt% of the total amount of the raw material mixture. If the raw material mixture is manufactured within the above range, an aerogel layer having excellent thermal insulation, heat resistance, flexibility, and low dust properties may be manufactured.

In embodiments, the step of manufacturing the aerogel layer may include introducing the raw material mixture into the extruder and extruding the raw material mixture in the form of a sheet.

The step of manufacturing the aerogel layer may be performed at a temperature in a range of 25 °C to 150 °C, 30 °C to 100 °C, or 30 °C to 70 °C. In the step of manufacturing the aerogel layer, the pressure during extrusion may be in a range of 1 MPa to 100 MPa, 20 MPa to 80 MPa, or 30 MPa to 70 MPa. If the raw material mixture is extruded under the above conditions, an aerogel layer having a structure in which the aerogel particles are uniformly distributed in the dry binder may be formed.

The method of manufacturing the battery insulation sheet according to embodiments may be performed through a dry process, whereby no process solvent may be included, and therefore, no additional process for removing a residual solvent may be needed.

In an embodiment, if the raw material mixture is extruded through the extruder in the step of manufacturing the aerogel layer, the temperature may be in a range of 20 °C to 90 °C, 30 °C to 60 °C, or 35 °C to 55 °C. The pressure during extrusion may be in a range of 30 MPa to 70 MPa, 40 MPa to 65 MPa, or 40 MPa to 60 MPa. If the raw material mixture is extruded under conditions within the above range, an aerogel layer including a fibrillized polymer matrix in which the aerogel particles are dispersed may be manufactured.

The extruder may be, but is not limited to, a known extruder. For example, a uniaxial extruder and a twin-screw extruder may be used.

In embodiments, the method may further include a step of laminating a substrate on an upper surface, a lower surface, or upper and lower surfaces of the aerogel layer. As an example, a battery insulation sheet may be manufactured by laminating the aerogel layer onto a substrate. In another example, a battery insulation sheet may be manufactured by laminating a first substrate and a second substrate on the upper and lower surfaces of the aerogel layer, respectively. The substrate, the first substrate, and the second substrate may be the same as described above.

In the step of laminating the substrate, the substrate may be laminated on the upper surface, the lower surface, or the upper and lower surfaces of the aerogel layer using an adhesive. The step of laminating the substrate may be performed by forming an adhesive layer on the lower surface, or the upper and lower surfaces of the aerogel layer by coating using an ordinary adhesive and laminating the substrate on the adhesive layer.

A battery module according to embodiments may include a plurality of cells and the battery insulation sheet disposed between the plurality of cells, wherein the upper and lower surfaces of the battery insulation sheet may be disposed to face cells adjacent thereto, respectively.

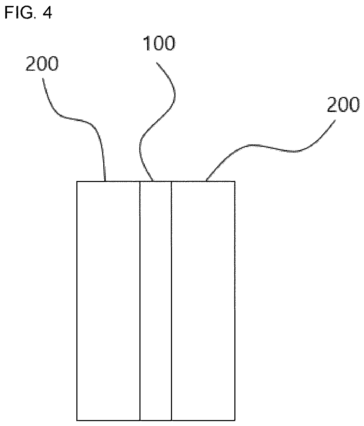

FIG. 4 is a schematic view showing a battery insulation sheet formed between the plurality of cells according to embodiments.

Referring to FIG. 4, the battery insulation sheet 100, according to an embodiment, may be formed between a plurality of cells 200 included in a battery module. The battery insulation sheet 100 may include an upper surface, a lower surface, and a border side surface between the upper surface and the lower surface, wherein the upper and lower surfaces, i.e., the upper surface and the lower surface, of the battery insulation sheet 100 may be disposed so as to face cells 200 adjacent thereto, respectively. For example, the upper and lower surfaces of the aerogel layer 110 of FIG. 1 may be disposed (or arranged) to face the cells 200 formed on the left and right sides in FIG. 4, respectively. As another example, the upper surface of the aerogel layer 110 of FIG. 2 and the lower surface of the substrate 120 shown in Fig. 2 may be disposed so as to face the cells 200 formed on the left and right in FIG. 4, respectively. As a further example, the lower surface of the first substrate 130 and the upper surface of the second substrate 140 shown in FIG. 3 may be disposed so as to face the cells 200 formed on the left and right in FIG. 4, respectively. If the battery insulation sheet 100, according to embodiments, is formed between the plurality of cells 200, a battery module capable of substantially blocking flames or heat from one cell in advance, thereby inhibiting the propagation of the flames to other cells with a higher level of safety. Accordingly, safety of a battery pack including the battery insulation sheet 100 is increased. In other words, flames or heat is blocked from advancing to other cells.

Hereinafter, specific examples will be described. However, the following examples are intended to illustrate or describe the aspects and features of the present disclosure and should not be construed as limiting the disclosure. Contents that are not described herein may be sufficiently technically inferred by those skilled in the art, and therefore a description thereof will be omitted.

**Manufacture of battery insulation sheet**

**Example 1**

**1. Manufacture of raw material mixture**

A raw material mixture was manufactured by mixing powdered polytetrafluoroethylene as a dry binder and aerogel particles (D50 50 $\mu$m). The raw material mixture was subjected to primary dry mixing at a stirring speed of 1000 rpm at 25 °C for 10 min to manufacture a first mixture. Subsequently, the first mixture was further mixed at a stirring speed of 5000 rpm at 25 °C for 20 min to manufacture a second mixture.

The content of polytetrafluoroethylene was 50 wt% of the total amount of the raw material mixture, and the content of the aerogel particles was 50 wt% of the total amount of the raw material mixture.

**2. Manufacture of aerogel layer**

The prepared second mixture was introduced into an extruder and extruded at a temperature of 45 °C and a pressure of 50 MPa to form an aerogel layer having the aerogel particles distributed in a fibrillized polytetrafluoroethylene matrix. The thickness of the aerogel layer was measured to be 2 mm.

**3. Manufacture of battery insulation sheet**

A battery insulation sheet was manufactured by laminating a 0.1 mm thick mica sheet (for example, from Famica, Muscovite) on each of upper and lower surfaces of the aerogel layer by using a coating method using an adhesive.

**Example 2**

A battery insulation sheet was manufactured using the same method as in Example 1 except that a raw material mixture was manufactured so as to include 20 wt% of polytetrafluoroethylene and 80 wt% of aerogel particles.

**Example 3**

A battery insulation sheet was manufactured using the same method as in Example 1 except that a raw material mixture was manufactured so as to include 35 wt% of polytetrafluoroethylene and 65 wt% of aerogel particles.

**Example 4**

A battery insulation sheet was manufactured using the same method as in Example 1 except that a raw material mixture was manufactured so as to include 65 wt% of polytetrafluoroethylene and 35 wt% of aerogel particles.

**Example 5**

A battery insulation sheet was manufactured using the same method as in Example 1 except that aerogel particles having an average particle size D50 of 5 $\mu$m were used and a raw material mixture was manufactured so as to include 80 wt% of polytetrafluoroethylene and 20 wt% of the aerogel particles.

**Example 6**

A battery insulation sheet was manufactured using the same method as in Example 1 except that aerogel particles having an average particle size D50 of 100 $\mu$m were used.

**Comparative Example 1**

**1. Manufacture of aerogel composition**

An aerogel composition was manufactured by introducing polyvinyl alcohol (Sigma Aldrich), as an aqueous binder, polytetrafluoroethylene, as a dry binder, and aerogel particles into an ultrapure solvent and mixing the same.
The solid content of the aerogel composition was measured to be 85 wt% of aerogel, 10 wt% of polyvinyl alcohol, and 5 wt% of polytetrafluoroethylene.

**2. Manufacture of battery insulation sheet**

A slurry application of the manufactured aerogel composition was made to a 0.1 mm thick mica sheet (for example, Famica, Muscovite), another 0.1 mm thick mica sheet was laminated thereon in a sandwich manner, and coating was performed using a roll-rolling method. Subsequently, an aerogel layer was formed by drying to manufacture a battery insulation sheet.

**Comparative Example 2**

A battery insulation sheet was manufactured using the same method as in Comparative Example 1 except that an aerogel composition including 50 wt% of aerogel and 50 wt% of polytetrafluoroethylene as solid content was manufactured by adjusting the input amounts of raw materials. In this case, the battery insulation sheet could not be manufactured due to the difficulty in dispersing the polytetrafluoroethylene.

**Comparative Example 3**

A battery insulation sheet was manufactured using the same method as in Comparative Example 1 except that an aerogel composition including 85 wt% of aerogel, 5 wt% of polyvinyl alcohol, and 10 wt% of polytetrafluoroethylene as solid content was manufactured by adjusting the input amounts of raw materials. In this case, the battery insulation sheet could not be manufactured due to the difficulty in dispersing the polytetrafluoroethylene.

**Experimental Example**

**Experimental Example 1: Evaluation of thermal insulation**

Thermal insulation of each of the battery insulation sheets manufactured in Examples 1 to 6 and Comparative Examples 1 to 3 was evaluated using the following method, and the results are shown in Table 1 below.
Measurement of thermal conductivity (mW/mK) at room temperature (23±5 °C) of samples manufactured by cutting each insulation sheet into 125 mm to 150 mm wide and 125 mm to 150 mm long samples, and the thermal conductivity of the sample was measured at room temperature (23±5 °C) using HFM 436 Lambda equipment from NETZSCH. The lower the thermal conductivity at room temperature, the better the thermal insulation of the insulation sheet.

**Experimental Example 2: Evaluation of dustiness**

Dustiness of each of the battery insulation sheets manufactured in Examples 1 to 6 and Comparative Examples 1 to 3 was evaluated using the following method, and the results are shown in Table 1 below.
The dustiness test was performed by measuring the weight reduction rate of each battery insulation sheet under vibration at 24 Hz/3mm for 6 hours by using a vibration tester (ASTMC592-04)
The sample preparation includes the preparation of a 12 inch x 12 inch insulation sheet.

Weight reduction rate [%] = [(Weight of insulation sheet before evaluation) - (Weight of insulation sheet after evaluation)] / (Weight of insulation sheet before evaluation) x 100

**Experimental Example 3: Evaluation of flexibility**

Flexural modulus of each of the battery insulation sheets manufactured in Examples 1 to 6 and Comparative Examples 1 to 3 was evaluated using the following method, and the results are shown in Table 1 below.
The flexural modulus (MPa)was measured by manufacturing a sample according to ASTM D790 from each insulation sheet, and flexural modulus of the sample was measured by using UTM (UT-005E) from MTDI. A 3-point bending analysis method was used. The manufactured sample was put on a support, force was applied to the center of the sample at a speed of 1 mm/min to 10 mm/min to record load, and an initial slope value was measured by dividing the load by 15% strain to measure the flexural modulus at 15% strain. The lower the flexural modulus, the more flexible the insulation sheet.

**Table 1**

|  | Coatability | Thermal conductivity [mW/mK @ RT] | Weight reduction rate [%] | Flexural modulus [MPa] |
|---|---|---|---|---|
| Example 1 | ○ | 18.3 | 0.00 | 0.060 |
| Example 2 | ○ | 17.8 | 0.02 | 0.071 |
| Example 3 | ○ | 18.1 | 0.01 | 0.082 |
| Example 4 | ○ | 19.0 | 0.00 | 0.088 |
| Example 5 | ○ | 19.5 | 0.00 | 0.090 |
| Example 6 | ○ | 16.9 | 0.02 | 0.068 |

(continued)

|  | Coatability | Thermal conductivity [mW/mK @ RT] | Weight reduction rate [%] | Flexural modulus [MPa] |
|---|---|---|---|---|
| Comparative Example 1 | ○ | 17.8 | 0.40 | 0.120 |
| Comparative Example 2 | X | - | - | - |
| Comparative Example 3 | X | - | - | - |

Referring to Table 1 above, it can be seen that Examples exhibit excellent thermal insulation, dustiness, and flexibility. It can be expected that a high content of a binder having excellent heat resistance is included, and such Examples exhibit excellent heat resistance.

Referring to Examples 1 to 6, it can be seen that thermal insulation, dustiness, and flexibility change depending on the content of aerogel particles and polytetrafluoroethylene. It can be seen that, if the average particle size of the aerogel particles is in a range of 50 $\mu$m to 100 $\mu$m and the content of polytetrafluoroethylene is in a range of 20 wt% to 65 wt%, better physical property measurement results are acquired.

Referring to Comparative Example 1, it can be seen that, if the aerogel layer is formed through a wet process using a solvent, thermal insulation is similar to thermal insulation of Example 2 despite a higher content of aerogel particles, and flexibility and dustiness are also reduced. If the aerogel layer is manufactured through a wet process, as can be seen from Comparative Examples 1 to 3, it is not possible to include up to 5 wt% of polytetrafluoroethylene, and if the content of polytetrafluoroethylene exceeds the above value, it is difficult to form an aerogel layer due to a dispersibility problem. It can be seen that, if the aerogel layer is manufactured through the wet process, it is difficult to manufacture a battery insulation sheet having a small thickness, unlike the Examples.

Therefore, it can be seen that, if an aerogel composition according to embodiments is used, thermal insulation, heat resistance, flexibility, and low dust properties are excellent.

As is apparent from the above description, a battery insulation sheet according to embodiments may include a fibrillized polymer matrix in which aerogel is distributed through a dry process by using a heat-resistant dry binder and aerogel providing excellent thermal insulation, heat resistance, low dust properties, and flexibility of the battery insulation sheet.

While the foregoing describes exemplary embodiments of the present disclosure, the present disclosure is not limited thereto, and it is contemplated that various modifications may be made within the scope of the claims, the detailed description of exemplary embodiments, and the accompanying drawings, which also fall within the scope of the disclosure.

**Claims**

1.  A battery insulation sheet (100) comprising an aerogel layer (110), wherein
    the aerogel layer (110) comprises a fibrillized polymer matrix and aerogel particles distributed in the fibrillized polymer matrix, and
    the fibrillized polymer matrix comprises a dry binder.

2.  The battery insulation sheet (100) as claimed in claim 1, wherein
    the dry binder comprises a fluorinated binder, and the fluorinated binder is at least one selected from a group consisting of polytetrafluoroethylene, a polyvinylidene fluoride-hexapropylene copolymer, and polyvinylidene fluoride.

3.  The battery insulation sheet (100) as claimed in claim 1 or 2, wherein

    the fibrillated polymer matrix accounts for 10 wt% to 90 wt% of a total amount of the aerogel layer (110), and
    the aerogel particles account for 10 wt% to 90 wt% of the total amount of the aerogel layer (110).

4.  The battery insulation sheet (100) as claimed in any one of claims 1 to 3, wherein the aerogel particles have a BET specific surface area in a range of 500 m$^2$/g to 1,000 m $^2$/g,
    or wherein the aerogel particles have an average particle size (D50) in a range of 5 $\mu$m to 100 $\mu$m.

5.  The battery insulation sheet (100) as claimed in any one of claims 1 to 4, wherein the aerogel particles are dispersed in the fibrillized polymer matrix.

**6.** The battery insulation sheet (100) as claimed in any one of claims 1 to 5, wherein the aerogel layer (110) satisfies Formula 1 below.

[Formula 1]

$$0.1 \leq W_{FB}/T_{PM} \leq 18$$

wherein $W_{FB}$ is the content (in wt%) of the dry binder to the total amount of the aerogel layer (110), and $T_{PM}$ is the average particle size (in $\mu$m) of the aerogel particles.

**7.** The battery insulation sheet (100) as claimed in any one of claims 1 to 6, further comprising a substrate (120) on an upper surface, a lower surface, or upper and lower surfaces of the aerogel layer (110).

**8.** The battery insulation sheet (100) as claimed in claim 7, wherein the battery insulation sheet (100) has a structure in which a first substrate (130), the aerogel layer (110), and a second substrate (140) are sequentially laminated.

**9.** A method of manufacturing a battery insulation sheet (100), the method comprising:

manufacturing a raw material mixture comprising a powdered dry binder and powdered aerogel particles; and
extruding the raw material mixture using an extruder to manufacture an aerogel layer (110), wherein
the aerogel layer (110) comprises a fibrillized polymer matrix in which aerogel particles are distributed, and
the fibrillized polymer matrix comprises a dry binder.

**10.** The method as claimed in claim 9, wherein the step of manufacturing the raw material mixture comprises a primary dry mixing step or primary and secondary dry mixing steps.

**11.** The method as claimed in claim 9, wherein

the step of manufacturing the raw material mixture comprises a primary dry mixing step and a secondary dry mixing step, and
a stirring speed in the secondary dry mixing step is at least 2 times a stirring speed in the primary dry mixing step.

**12.** The method as claimed in claim 11, wherein

in the primary dry mixing step, a temperature is in a range of 20 °C to 65 °C, a stirring speed is 2000 rpm or less, and a stirring time is in a range of 5 min to 15 min, and
in the secondary dry mixing step, a temperature is in a range of 20 °C to 65 °C, a stirring speed is in a range of 4000 rpm to 10,000 rpm, and a stirring time is 10 min to 60 min.

**13.** The method as claimed in any one of claims 9 to 12, wherein the step of manufacturing the aerogel layer (110) comprises introducing the raw material mixture into the extruder and extruding the raw material mixture in a sheet form.

**14.** The method as claimed in any one of claims 9 to 13, wherein the step of manufacturing the aerogel layer (110) is performed at a temperature in a range of 25 °C to 150 °C and a pressure in a range of 1 MPa to 100 MPa.

**15.** A battery module comprising:

a plurality of cells (200); and
the battery insulation sheet (100) as claimed in any one of claims 1 to 8 provided between the plurality of cells (200), wherein
upper and lower surfaces of the battery insulation sheet (100) are disposed to face cells (200) adjacent thereto, respectively.

FIG. 1

100

110

FIG. 2

100

110

120

FIG. 3

100

140

110

130

FIG. 4

Europäisches
Patentamt

European
Patent Office

Office européen
des brevets

# EUROPEAN SEARCH REPORT

Application Number

EP 24 17 1237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/261579 A1 (GORE & ASS [US]) 15 December 2022 (2022-12-15) | 1-3,5, 7-10, 13-15 | INV. B32B19/04 H01M10/658 |
| Y | * abstract * <br> * claims 1-26 * <br> * paragraph [0103] - paragraph [0104] * <br> * paragraph [0065] - paragraph [0068]; figure 1B * <br> * paragraph [0077] * <br> * paragraph [0081] * <br> * paragraph [0084] * <br> ----- | 4,6 | H01M50/249 B32B5/16 B32B5/18 B32B5/30 B32B15/04 B32B27/06 |
| Y | US 7 118 801 B2 (GORE ENTERPRISE HOLDINGS INC [US]) 10 October 2006 (2006-10-10) <br> * abstract * <br> * claims 1-13 * <br> * column 1, line 6 - line 15 * <br> * column 16 - column 17; examples 4,5 * <br> * column 6, line 33 - line 43 * <br> * column 5, line 51 - line 56 * <br> * column 8, line 59 - column 9, line 6; figure 4 * <br> ----- | 4,6 | |
| A | WO 2018/183225 A1 (GORE & ASS [US]) 4 October 2018 (2018-10-04) <br> * abstract * <br> * paragraph [0088] - paragraph [0091]; claims 1-11 * <br> ----- | 1-15 | **TECHNICAL FIELDS SEARCHED (IPC)** <br> H01M <br> B32B |
| A | US 2009/082479 A1 (CHO MYUNG DONG [KR]) 26 March 2009 (2009-03-26) <br> * abstract * <br> * paragraph [0037]; claims 1-23 * <br> * paragraph [0043] * <br> * paragraph [0049] - paragraph [0050] * <br> ----- | 1-15 | |

The present search report has been drawn up for all claims

| Place of search | Date of completion of the search | Examiner |
|---|---|---|
| The Hague | 17 July 2024 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1237

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | Publication date | Patent family member(s) | | Publication date |
|---|---|---|---|---|
| WO 2022261579 A1 | 15-12-2022 | CA | 3219673 A1 | 15-12-2022 |
| | | CN | 117529521 A | 06-02-2024 |
| | | EP | 4352146 A1 | 17-04-2024 |
| | | JP | 2024523248 A | 28-06-2024 |
| | | KR | 20240020207 A | 14-02-2024 |
| | | WO | 2022261579 A1 | 15-12-2022 |
| US 7118801 B2 | 10-10-2006 | CA | 2543386 A1 | 26-05-2005 |
| | | CA | 2733298 A1 | 26-05-2005 |
| | | CN | 1875060 A | 06-12-2006 |
| | | DK | 1682611 T3 | 09-05-2016 |
| | | DK | 2615132 T3 | 27-03-2017 |
| | | DK | 2617761 T3 | 06-06-2016 |
| | | EP | 1682611 A1 | 26-07-2006 |
| | | EP | 2615132 A1 | 17-07-2013 |
| | | EP | 2617761 A1 | 24-07-2013 |
| | | HK | 1088624 A1 | 10-11-2006 |
| | | JP | 5336531 B2 | 06-11-2013 |
| | | JP | 5654437 B2 | 14-01-2015 |
| | | JP | 5857174 B2 | 10-02-2016 |
| | | JP | 2007510794 A | 26-04-2007 |
| | | JP | 2011098573 A | 19-05-2011 |
| | | JP | 2012107241 A | 07-06-2012 |
| | | JP | 2013139150 A | 18-07-2013 |
| | | PL | 1682611 T3 | 29-07-2016 |
| | | PL | 2615132 T3 | 30-06-2017 |
| | | PL | 2617761 T3 | 30-09-2016 |
| | | US | 2005100728 A1 | 12-05-2005 |
| | | US | 2005143515 A1 | 30-06-2005 |
| | | US | 2006196689 A1 | 07-09-2006 |
| | | US | 2006196690 A1 | 07-09-2006 |
| | | US | 2006240237 A1 | 26-10-2006 |
| | | US | 2007176282 A1 | 02-08-2007 |
| | | US | 2008105373 A1 | 08-05-2008 |
| | | US | 2008131683 A1 | 05-06-2008 |
| | | WO | 2005047381 A1 | 26-05-2005 |
| WO 2018183225 A1 | 04-10-2018 | CN | 110506073 A | 26-11-2019 |
| | | EP | 3601422 A1 | 05-02-2020 |
| | | JP | 2020515685 A | 28-05-2020 |
| | | KR | 20190127962 A | 13-11-2019 |
| | | WO | 2018183225 A1 | 04-10-2018 |
| US 2009082479 A1 | 26-03-2009 | JP | 5544074 B2 | 09-07-2014 |
| | | JP | 2009073731 A | 09-04-2009 |
| | | KR | 20090030635 A | 25-03-2009 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 17 1237

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | Publication date | Patent family member(s) | Publication date |
|---|---|---|---|
| | | US 2009082479 A1 | 26-03-2009 |

For more details about this annex : see Official Journal of the European Patent Office, No. 12/82